# EUROPÄISCHE PATENTSCHRIFT

(11) **EP 1 635 103 B1**
(45) Veröffentlichungstag und Bekanntmachung des Hinweises auf die Patenterteilung: **30.05.2007**
(21) Anmeldenummer: 05017154.5
(22) Anmeldetag: 06.08.2005
(51) Int. Cl.: F16L 37/088, F16L 37/14

(54) **Lösbare Steckverbindung für Rohrleitungen od. dgl.**
Releasable plug-in coupling for pipes or the like
Raccord détachable à fiche pour des tuyaux ou similaires

(30) Priorität: 14.09.2004 DE 102004044917
(43) Veröffentlichungstag der Anmeldung: 15.03.2006
(73) Patentinhaber: FTE automotive GmbH, 96106 Ebern (DE)
(72) Erfinder: Heim, Heiko, 99974 Mühlhausen (DE); Redai, Karl, 96106 Ebern (DE); Macht, Egid, 81247 München (DE); Stubenrauch, Helmut, 96106 Ebern (DE)
(74) Vertreter: Oppermann, Mark

(56) Entgegenhaltungen:
- EP-A- 0 811 798
- DE-A1- 3 531 926
- DE-A1- 4 236 323
- DE-U1- 9 014 400
- DE-U1- 29 610 434
- US-A- 5 909 901
- US-A1- 2003 052 484

## Beschreibung

### TECHNISCHES GEBIET

Die Erfindung bezieht sich auf eine lösbare Steckverbindung für Rohrleitungen od.dgl. gemäß dem Oberbegriff des Patentanspruchs 1. Insbesondere bezieht sich die Erfindung auf eine lösbare Steckverbindung für Rohrleitungen od.dgl. in hydraulischen Kupplungsbetätigungs- und Bremsanlagen für Kraftfahrzeuge.

### STAND DER TECHNIK

Insbesondere in hydraulischen Bremsanlagen für Kraftfahrzeuge, in denen die Hydraulikverbindungen Drücke von 70 bar und mehr zu übertragen haben, stellen Gewinde- bzw. Schraubverbindungen mit Überwurfschrauben oder -muttern, wie sie prinzipiell aus den deutschen Normen DIN 74233 und 74234 bekannt sind, den am weitesten verbreiteten Stand der Technik dar. Bei sowohl der Montage am Fließband als auch der Demontage dieser Verbindungen wurde in der Zwischenzeit der Wechsel vom Schraubenschlüssel zum elektrischen oder pneumatischen Schrauber vollzogen, so daß auf diese Weise der Zeitaufwand für die Herstellung einer hydraulisch dichten Verbindung verkürzt werden konnte. Insbesondere bei der Montage dieser Verbindungen in Über-Kopf-Position besteht aber nach wie vor das Problem, daß die Innen- und Außengewindeabschnitte der Verbindungsteile in zueinander verkanteter Stellung aufeinander gesetzt werden können bevor die Verbindung mit dem Schrauber angezogen wird. Letzterer schaltet bei einem vorgegebenen Anzugsdrehmoment ab, welches bei einer korrekt ausgebildeten Gewindeverbindung eine hydraulisch dichte Verbindung indiziert, bei einem infolge einer Verkantung der Verbindungsteile erhöhten Anzugsdrehmoment eine hydraulisch dichte Verbindung jedoch nur vortäuscht. Die resultierende Undichtigkeit der Verbindung wird oftmals erst beim Befüllen der hydraulischen Anlage entdeckt, worauf kostenintensiv Abhilfe zu schaffen ist. Schlimmstenfalls tritt die Undichtigkeit erst im Betrieb der hydraulischen Anlage zutage, mit der Folge gefahrenträchtiger Situationen.

Neben den klassischen Gewinde- bzw. Schraubverbindungen sind im Stand der Technik auch lösbare Steckverbindungen für Rohrleitungen bekannt (siehe z.B. die DE 35 31 926 C2 oder die DE 102 90 508 T1). In diesem Zusammenhang offenbart die gattungsbildende DE 296 10 434 U1 der Anmelderin ein Endstück eines Hydraulikrohrs, an dem eine Bördelung angestaucht ist, um die herum ein Widerlager aus Kunststoff formschlüssig angespritzt ist. Das Widerlager weist eine vom Rohrende abgewandte ebene Ringfläche auf, die sich senkrecht zur Mittelachse des Hydraulikrohrs erstreckt. Das Endstück ist in eine Anschlußbohrung in einer Steckhülse einer lösbaren Steckverbindung einsteckbar und in dieser mittels eines Sicherungselements aus rundem Federstahldraht gegen ein Herausziehen gesichert, wobei sich die Ringfläche des Widerlagers an dem Sicherungselement in axialer Richtung des Hydraulikrohrs abstützen kann. Das Widerlager hat hier des weiteren einen zylindrischen Abschnitt, der an seiner vom Rohrende abgewandten Seite von der Ringfläche begrenzt ist und die Bördelung des Hydraulikrohrs umschließt. An den zylindrischen Abschnitt, der eine Führung des Endstücks in der Anschlußbohrung der Steckhülse, insbesondere bezüglich eines in der Anschlußbohrung angeordneten elastischen Dichtelements bezweckt, schließt sich in Richtung des Rohrendes stufenlos ein kegelförmiger Abschnitt an, der sich von dem Durchmesser des zylindrischen Abschnitts in Richtung des Rohrendes auf annähernd den Außendurchmesser des Hydraulikrohrs verjüngt und dazu dient, das Sicherungselement beim Zusammenfügen der Steckverbindung radial nach außen elastisch aufzuweiten bevor das Sicherungselement am Ende des Fügevorgangs nach Passieren des zylindrischen Abschnitts hinter der Ringfläche des Widerlagers verrastet.

Obgleich derartige lösbare Steckverbindungen im Vergleich zu den klassischen Gewinde- bzw. Schraubverbindungen sich über Kopf leichter montieren lassen, gleichermaßen hydraulisch hochdruckfest sind - so sie korrekt montiert wurden - und sich somit grundsätzlich auch für Bremsenanwendungen in Kraftfahrzeugen eignen, stoßen sie in der Automobilindustrie nach wie vor auf Vorbehalte, da in der Fließbandfertigung bisher nicht mit vertretbarem Aufwand sicher festgestellt werden konnte, ob die Hydraulikverbindung korrekt gefügt wurde oder nicht.

Der Erfindung liegt demgemäß die Aufgabe zugrunde, eine lösbare Steckverbindung zu schaffen, die im Vergleich zum Stand der Technik bei gleichermaßen guter Hochdruckfestigkeit im Hinblick auf die Stecksicherheit verbessert ist.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 12.

### DARSTELLUNG DER ERFINDUNG

Erfindungsgemäß endet bei einer lösbaren Steckverbindung für Rohrleitungen od.dgl., insbesondere in hydraulischen Kupplungsbetätigungs- und Bremsanlagen für Kraftfahrzeuge, mit einem Aufnahmeteil, einem in das Aufnahmeteil in einer Fügerichtung einsteckbaren, mit der Rohrleitung od.dgl. verbundenen Einsteckteil, einem zwischen dem Aufnahmeteil und dem Einsteckteil abdichtenden Dichtelement und einem am Aufnahmeteil angebrachten, federelastischen Sicherungselement zur Sicherung des Einsteckteils am Aufnahmeteil, wobei das Einsteckteil einen vorzugsweise metallischen Rohrabschnitt aufweist, an dem ein vorzugsweise aus einem Kunststoff bestehendes Widerlager vorgesehen ist, mit einem sich entgegen der Fügerichtung kontinuierlich im Außendurchmesser vergrößernden Aufweitungsabschnitt, über den das Sicherungselement beim Einstecken des Einsteckteils in das Aufnahmeteil auffederbar ist, und einer Widerlagerfläche, hinter der das Sicherungselement am Ende des Einsteckvorgangs verrastbar ist und die dazu dient, das Einsteckteil gegen ein unbeabsichtigtes Lösen vom Aufnahmeteil am Sicherungselement abzustützen; der Aufweitungsabschnitt entgegen der Fügerichtung mit seinem größten Außendurchmesser etwa an der Widerlagerfläche, wobei am freien Ende des Einsteckteils an dem Rohrabschnitt ein Bördel ausgebildet ist, der am Einsteckteil eine stirnseitige Dichtfläche ausbildet, an der im montierten Zustand der Steckverbindung das im Aufnahmeteil aufgenommene Dichtelement dichtend anliegt.

Mit anderen Worten gesagt schließt sich in axialer Richtung des Einsteckteils gesehen an die Stelle maximalen Außendurchmessers des Aufweitungsabschnitts des Widerlagers im wesentlichen übergangslos bzw. im wesentlichen unmittelbar die vom freien Ende des Einsteckteils abgewandte, vom Sicherungselement hintergreifbare Widerlagerfläche des Widerlagers an. Dies hat zur Folge, daß beim Fügen der Steckverbindung entweder das Einsteckteil aufgrund der senkrecht zur Mittelachse wirkenden Federkraft des Sicherungselements, die an dem bezüglich der Mittelachse des Einsteckteils schrägen Aufweitungsabschnitt des Widerlagers angreift, mit einer Axialkraft beaufschlagt wird, die bestrebt ist, das Einsteckteil entgegen der Fügerichtung wieder aus dem Aufnahmeteil hinauszuschieben, oder aber, wenn das Einsteckteil in der Fügerichtung weit genug in das Aufnahmeteil hineingeschoben wurde, das Sicherungselement hinter der Widerlagerfläche des Widerlagers verrastet. Es existieren also nur die beiden Möglichkeiten "korrekt gefügt", d.h. das Sicherungselement ist hinter der Widerlagerfläche verrastet, um das Einsteckteil formschlüssig am Aufnahmeteil zu halten, oder "nicht korrekt gefügt", d.h. das Einsteckteil wird aufgrund der Federkraft des Sicherungselements wieder aus dem Aufnahmeteil hinausgeschoben. Irgendwelche Zwischenstellungen, bei denen das Einsteckteil aufgrund der Federkraft des Sicherungselements lediglich durch Reibschluß im Aufnahmeteil gehalten wird, ohne daß die Steckverbindung korrekt gefügt und damit hydraulisch belastbar wäre, sind im Gegensatz zum gattungsbildenden Stand der Technik nicht möglich. Bei letzterem ist nämlich eine "Scheinfügung", d.h. eine Zwischenstellung möglich, in der das aufgefederte Sicherungselement an dem zylindrischen Führungsabschnitt des Widerlagers anliegt, wodurch das Endstück nur reibschlüssig in der Anschlußbohrung der Steckhülse gehalten ist; wird diese von außen nur schwer erkennbar nicht korrekt gefügte Steckverbindung hydraulisch beaufschlagt, löst sich das Endstück in ungewollter Weise von der Steckhülse. Im Ergebnis wird durch die erfindungsgemäße Ausgestaltung der Steckverbindung also auf einfache Weise gewährleistet, daß schon bei der Montage der Steckverbindung ein Irrtum darüber, ob die Steckverbindung korrekt gefügt wurde oder nicht, praktisch ausgeschlossen ist, so daß eine hohe Stecksicherheit gegeben bzw. eine prozeßsichere Steckverbindung geschaffen ist.

Dadurch, daß darüber hinaus am freien Ende des Einsteckteils an dem Rohrabschnitt ein Bördel angestaucht ist, der am Einsteckteil eine stirnseitige Dichtfläche ausbildet, an der im montierten Zustand der Steckverbindung das im Aufnahmeteil aufgenommene Dichtelement dichtend anliegt, wird zwischen Einsteckteil und Aufnahmeteil eine axiale Abdichtung geschaffen, die gegenüber der im obigen Stand der Technik verwendeten radialen Abdichtung mehrere Vorteile hat. Zum einen erfolgt am Ende des Fügevorgangs in vorteilhafter Weise eine gewisse Komprimierung, d.h. Vorspannung des Dichtelements, welches hierbei an der stirnseitigen Dichtfläche des Einsteckteils eine - wenn auch nur geringe - Axialkraft entgegen der Fügerichtung aufbringt, die somit dann wirkt, wenn sich der kritische Übergang zwischen Aufweitungsabschnitt und Widerlagerfläche des Widerlagers direkt unter dem Sicherungselement befindet, was zusätzlich eine instabile "Scheinfügung" an dieser Stelle verhindert. Außerdem sorgt das Dichtelement so seinerseits für ein Verspannen des Einsatzteils gegen das Sicherungselement, wodurch an dieser Stelle eine unerwünschte Geräuschentwicklung (Klappern oder ähnliches) verhindert wird. Zum anderen werden infolge der axialen Abdichtung die im Betrieb unter hydraulischer Beaufschlagung der Steckverbindung in Löserichtung, d.h. entgegen der Fügerichtung am Einsteckteil wirkenden Kräfte verglichen zur radialen Abdichtung im gattungsbildenden Stand der Technik deutlich reduziert, weil das Dichtelement stirnseitig am Einsteckteil anliegt und somit dessen ringförmige Stirnfläche gar nicht oder nur an einem sehr kleinen Flächenabschnitt druckbeaufschlagt wird, was vorteilhaft mit einer geringen Volumenaufnahme und damit, etwa beim Einsatz der Steckverbindung in einer hydraulischen Kupplungsbetätigungsanlage, vernachlässigbaren Hubwegverlusten am Kolben des Kupplungsgeberzylinders einhergeht.

Besonders kostengünstig und belastbar ist eine Ausgestaltung des Einsteckteils, bei der der Rohrabschnitt vom freien Ende des Einsteckteils beabstandet mit einem angestauchten weiteren Bördel versehen ist, um den herum das Widerlager formschlüssig angespritzt ist. Es ist jedoch auch eine Ausgestaltung ohne Bördel denkbar, bei der das Widerlager kraftschlüssig und/oder mittels z.B. einer Klebeverbindung am Rohrabschnitt befestigt ist. Ebenfalls könnte ein Widerlager mit einer innenumfangsseitigen Nut vorgesehen sein, welches geschlitzt und somit zur Montage am Rohrabschnitt auffederbar ist, wobei der Bördel am Rohrabschnitt im montierten Zustand des Widerlagers in der Nut aufgenommen ist, um das Widerlager formschlüssig am Rohrabschnitt festzulegen, wie es prinzipiell aus der DE 35 31 926 C2 bekannt ist.

Insbesondere im Hinblick auf geringe beim Fügen der Steckverbindung aufzubringende Fügekräfte und einen gleichmäßigen Fügekraftverlauf (Fügekraft = f (Fügeweg)) ist es von Vorteil, wenn der Kunststoff des Widerlagers einen im Verhältnis geringen Reibbeiwert aufweist und der Aufweitungsabschnitt des Widerlagers mit der Mittelachse des Einsteckteils einen Winkel im Bereich von 5° bis 20°, vorzugsweise im Bereich von 7° bis 10° einschließt.

Ferner kann die stirnseitige Dichtfläche am Einsteckteil mit der Mittelachse des Einsteckteils einen Winkel kleiner 90° und größer gleich 75° einschließen, so daß sich die Dichtfläche in Fügerichtung des Einsteckteils im wesentlichen konisch verjüngt, wodurch das Dichtelement in vorteilhafter Weise auch eine radiale Vorspannung erfährt, die insbesondere bei der Vakuumdruckbefüllung der Hydraulikanlage, an der die Steckverbindung eingesetzt wird, ein Verrücken, Verkanten oder Ausziehen des Dichtelements aus seinem ringförmigen Aufnahmeraum unter Vakuum verhindert.

Weiterhin kann sich das Widerlager bis zu dem Bördel des Rohrabschnitts am freien Ende des Einsteckteils hin erstrecken, was einerseits insofern zu einer Geräuschminderung im Betrieb der Steckverbindung beiträgt, als hier ein metallischer Kontakt zwischen Einsteckteil und Aufnahmeteil verhindert wird. Außerdem bewirkt eine derartige Ausgestaltung des Einsteckteils einen gewissen Korrosionsschutz am Rohrabschnitt: Die in der Bremshydraulik verwendeten Hydraulikrohre sind zwar grundsätzlich insofern korrosionsgeschützt, als sie am Außenumfang mit einer galvanisch aufgebrachten, etwa 12 bis 25 µm starken Zinkschicht versehen sind, auf der sich eine zusätzliche Kunststoffbeschichtung befindet. Dieser Schichtaufbau kann beim Anstauchen des Bördels am Rohrabschnitt aber beschädigt werden oder abplatzen. Überdeckt der Kunststoff des Widerlagers nun derartig beschädigte Stellen des Rohrabschnitts, kann hier ein Korrosionsproblem nicht entstehen.

Es ist bevorzugt, wenn es sich bei dem Dichtelement um einen elastomeren, sogenannten "Quadring" handelt, mit einem Ringkörper, der einen im wesentlichen quadratischen Querschnitt aufweist, und vier balligen Dichtwulsten, die im Querschnitt gesehen in symmetrischer Anordnung an den Ecken des Ringkörpers ausgebildet sind. Ein solcher Quadring hat gegenüber einem O-Ring - der grundsätzlich auch verwendbar wäre - u.a. den Vorteil, daß er ein besseres Verformungsverhalten aufweist und somit die überwiegend formgebundenen und damit kleinen axialen Form- und Lagetoleranzen zwischen Einsteckteil, Aufnahmeteil und Sicherungselement sicher auszugleichen vermag.

Zweckmäßig kann das Sicherungselement in einer Draufsicht gesehen im wesentlichen U-förmig ausgebildet sein, mit zwei Widerlagerarmen, die federnd miteinander verbunden sind und sich durch Schlitze in das Aufnahmeteil hinein erstrecken, wo sie jeweils einen Anlageabschnitt für die Widerlagerfläche am Widerlager des Einsteckteils aufweisen.

Wenn hierbei die Widerlagerarme des Sicherungselements über Bügelabschnitte mit einem Bogenabschnitt verbunden sind, welcher sich im wesentlichen parallel zu den Widerlagerarmen erstreckt und der federnden Verbindung der Widerlagerarme dient, wobei das Einsteckteil durch den Bogenabschnitt hindurch in das Aufnahmeteil einsteckbar ist, wird in vorteilhafter Weise zugleich gewährleistet, daß im montierten Zustand der Steckverbindung das Sicherungselement selbst am Einsteckteil oder an der Rohrleitung od.dgl. verliergesichert ist, so daß ein ungewolltes Lösen der Steckverbindung ausgeschlossen ist, ohne daß hierfür weitere Maßnahmen zu treffen wären.

Des weiteren kann sich das Widerlager mit einem im wesentlichen zylindrischen Anlageabschnitt für das Sicherungselement entgegen der Fügerichtung über die Widerlagerfläche hinaus erstrecken, wobei der Außendurchmesser des Anlageabschnitts des Widerlagers größer ist als der lichte Abstand der Anlageabschnitte der Widerlagerarme im unbelasteten Zustand des Sicherungselements. Bei dieser Ausgestaltung entsteht beim Fügen der Steckverbindung, wenn das Sicherungselement hinter der Widerlagerfläche verrastet, ein wahrnehmbares Geräusch ("Klack"), weil die Anlageabschnitte der Widerlagerarme des Sicherungselements am Anlageabschnitt des Widerlagers anschlagen, so daß der korrekt gefügte Zustand der Steckverbindung auch akustisch angezeigt wird. Eine Beschädigung des Rohrabschnitts des Einsteckteils ist hierbei ausgeschlossen, da der Kunststoff des Anlageabschnitts des Widerlagers den Rohrabschnitt an dieser Stelle überdeckt.

Im weiteren Verfolg des Erfindungsgedankens kann ein geschlitzter Indikatorring vorgesehen sein, der innenumfangsseitig an dem Sicherungselement anliegt und mit diesem auffederbar ist, wobei der Indikatorring außenumfangsseitig über das Aufnahmeteil übersteht, wenn das Sicherungselement mittels des Aufweitungsabschnitts des Widerlagers aufgefedert ist, und im wesentlichen bündig mit dem Aufnahmeteil abschließt, wenn das Sicherungselement am Ende des Einsteckvorgangs hinter der Widerlagerfläche des Widerlagers verrastet ist, um auf einfache Weise zusätzlich eine sicht- und/oder fühlbare Anzeige für den Verbindungszustand der Steckverbindung bereitzustellen, die von dem Monteur wahrgenommen werden kann oder aber auch mittels einer geeigneten Sensorik automatisch erfaßbar ist. Ein solcher Indikatorring hat darüber hinaus den Vorteil, daß er für einen gewissen Schutz gegen eine Verschmutzung derjenigen Widerlagerflächen sorgt, mit denen das Sicherungselement im gefügten Zustand der Steckverbindung zusammenwirkt, so daß die Steckverbindung - etwa zum Austausch oder zur Reparatur einer Hydraulikkomponente - problemlos gelöst und sodann wieder gefügt werden kann.

In einer einfachen Ausgestaltung kann hierbei die Anordnung derart getroffen sein, daß das Aufnahmeteil außenumfangsseitig mit einer Radialnut zur Aufnahme des Indikatorrings versehen ist, die eine vorbestimmte Tiefe aufweist, daß sich ausgehend vom Nutgrund der Radialnut die Schlitze zur Aufnahme der Widerlagerarme des Sicherungselements in das Aufnahmeteil hinein erstrecken, daß der Indikatorring einen in einer Draufsicht gesehen im wesentlichen C-förmigen Grundkörper aufweist, dessen radiale Dicke im wesentlichen der Tiefe der Radialnut im Aufnahmeteil entspricht, und daß am Innenumfang des Grundkörpers des Indikatorrings Vorsprünge ausgebildet sind, die sich in die Schlitze im Aufnahmeteil hinein erstrecken, um an den Widerlagerarmen des Sicherungselements anzuliegen.

Der Indikatorring kann schließlich grundsätzlich aus einem metallischen Werkstoff bestehen. Im Hinblick auf eine einfache Formgebung und geringe Kosten ist es jedoch bevorzugt, wenn der Indikatorring aus Kunststoff spritzgegossen ist.

### KURZE BESCHREIBUNG DER ZEICHNUNGEN

Im folgenden wird die Erfindung anhand eines bevorzugten Ausführungsbeispiels unter Bezugnahme auf die beigefügten Zeichnungen näher erläutert. In den Zeichnungen zeigen:
- Fig. 1: eine im Maßstab gegenüber den realen Abmessungen vergrößerte, zu beiden Seiten abgebrochene, perspektivische Darstellung eines Zwischenstücks zur Verbindung von zwei Rohrleitungen, an dem zwei erfindungsgemäße Steckverbindungen ausgeführt sind, die im gefügten Zustand gezeigt sind,
- Fig. 2: eine zu beiden Seiten abgebrochene Seitenansicht des Zwischenstücks gemäß Fig. 1 mit gefügten Rohrleitungen,
- Fig. 3: eine Schnittansicht der in Fig. 1 linken Steckverbindung entsprechend der Schnittverlaufslinie III-III in Fig. 2,
- Fig. 4: eine zu beiden Seiten abgebrochene und oberhalb der Mittelachse aufgebrochene Ansicht des Zwischenstücks gemäß Fig. 1 von unten in Fig. 2,
- Fig. 5: eine im Maßstab gegenüber der Darstellung in den Fig. 1 bis 4 vergrößerte, abgebrochene Längsschnittansicht eines Einsteckteils der in den Fig. 1, 2 und 4 linken Steckverbindung,
- Fig. 6: eine vergrößerte Darstellung des Details VI in Fig. 5,
- Fig. 7: eine perspektivische Darstellung eines bei den in den Fig. 1 bis 4 gezeigten Steckverbindungen verwendeten Sicherungselements aus Federstahldraht im Ruhezustand, d.h. im unbelasteten Zustand des Sicherungselements,
- Fig. 8: eine Draufsicht auf das Sicherungselement von oben in Fig. 7,
- Fig. 9: eine Seitenansicht des Sicherungselements von links in Fig. 8,
- Fig. 10: eine Schnittansicht des Sicherungselements entsprechend der Schnittverlaufslinie X-X in Fig. 9,
- Fig. 11: eine im Maßstab gegenüber der Darstellung in den Fig. 1 bis 4 vergrößerte, perspektivische Darstellung eines Indikatorrings zur Anzeige des Verbindungszustands der Steckverbindung, der bei der in den Fig. 1, 2 und 4 links gezeigten Steckverbindung genutzt ist,
- Fig. 12: eine Draufsicht auf den Indikatorring gemäß Fig. 11,
- Fig. 13: eine Schnittansicht des Indikatorrings gemäß Fig. 11 entsprechend der Schnittverlaufslinie XIII-XIII in Fig. 12,
- Fig. 14: eine Ansicht des Indikatorrings gemäß Fig. 11 von oben in Fig. 12, die in der Zeichnungsebene um 90° im Uhrzeigersinn gedreht wurde,
- Fig. 15: eine abgebrochene, perspektivische Darstellung des Zwischenstücks gemäß Fig. 1 im Bereich der in den Fig. 1, 2 und 4 linken Steckverbindung, die noch nicht vollständig gefügt ist, so daß der Indikatorring deutlich nach radial außen über das Zwischenstück vorsteht,
- Fig. 16: eine zu beiden Seiten abgebrochene Seitenansicht des Zwischenstücks gemäß Fig. 1 in der Fügestellung gemäß Fig. 15,
- Fig. 17: eine Schnittansicht der Steckverbindung gemäß Fig. 15 entsprechend der Schnittverlaufslinie XVII-XVII in Fig. 16 und
- Fig. 18: eine zu beiden Seiten abgebrochene Seitenansicht des Zwischenstücks gemäß Fig. 1 in der Fügestellung gemäß Fig. 15, die sich von der Darstellung in Fig. 16 dadurch unterscheidet, daß das Zwischenstück oberhalb der Mittelachse aufgebrochen ist.

### DETAILLIERTE BESCHREIBUNG DES AUSFÜHRUNGSBEISPIELS

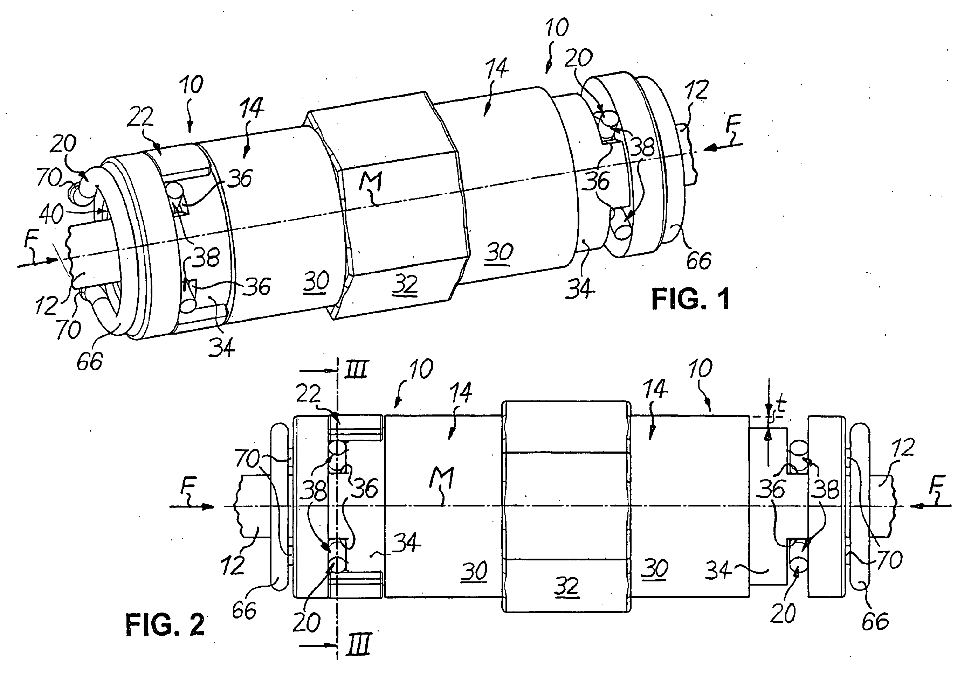

In den Fig. 1 bis 4 ist beispielhaft für einen Einsatzort für eine lösbare Steckverbindung 10 ein Zwischenstück dargestellt, welches der hydraulisch dichten Verbindung von zwei Rohrleitungen 12 in z.B. einer hydraulischen Kupplungsbetätigungs- oder Bremsanlage für Kraftfahrzeuge dient. Die in den Figuren gezeigte und nachfolgend ausführlich beschriebene Steckverbindung 10 kann jedoch gleichermaßen beispielsweise an einem Zwischenstück zur hydraulisch dichten Verbindung einer Rohrleitung mit einem Schlauchstück oder an einem Anschluß einer Hydraulikkomponente, wie eines Geber- oder Nehmerzylinders, eines Druckmodulators für Bremsanlagen oder anderer hydraulischer Brems- oder Kupplungsbetätigungseinheiten oder -komponenten zum Einsatz kommen. Im Folgenden wird lediglich die in den Fig. 1, 2 und 4 linke Steckverbindung 10 ausführlich beschrieben, nachdem sich die in diesen Figuren rechte Steckverbindung 10 nur geringfügig von der linken Steckverbindung 10 unterscheidet, die jeweiligen Unterschiede werden jedoch auch angesprochen.

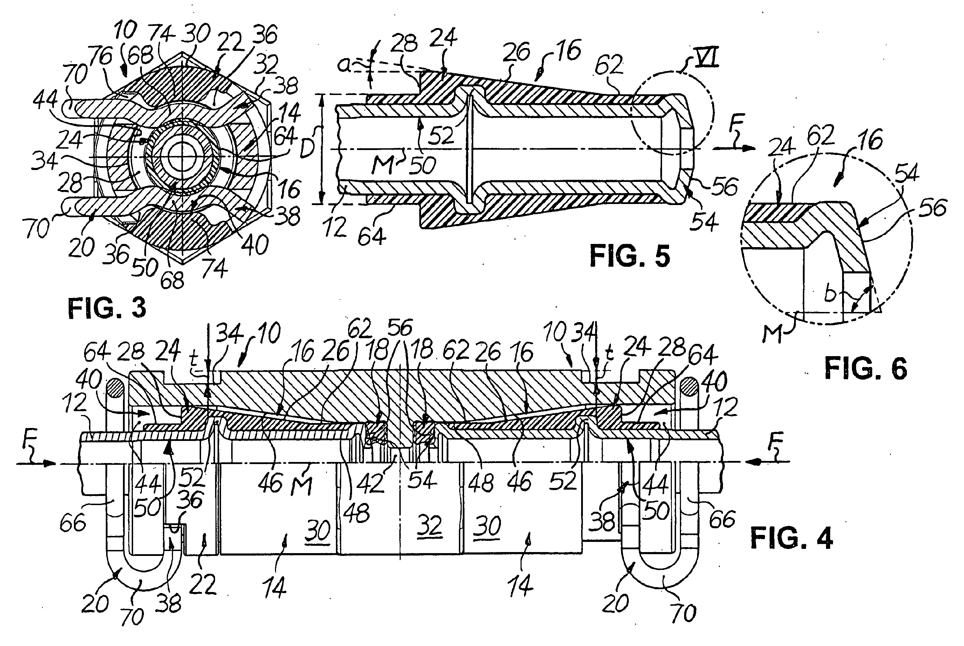

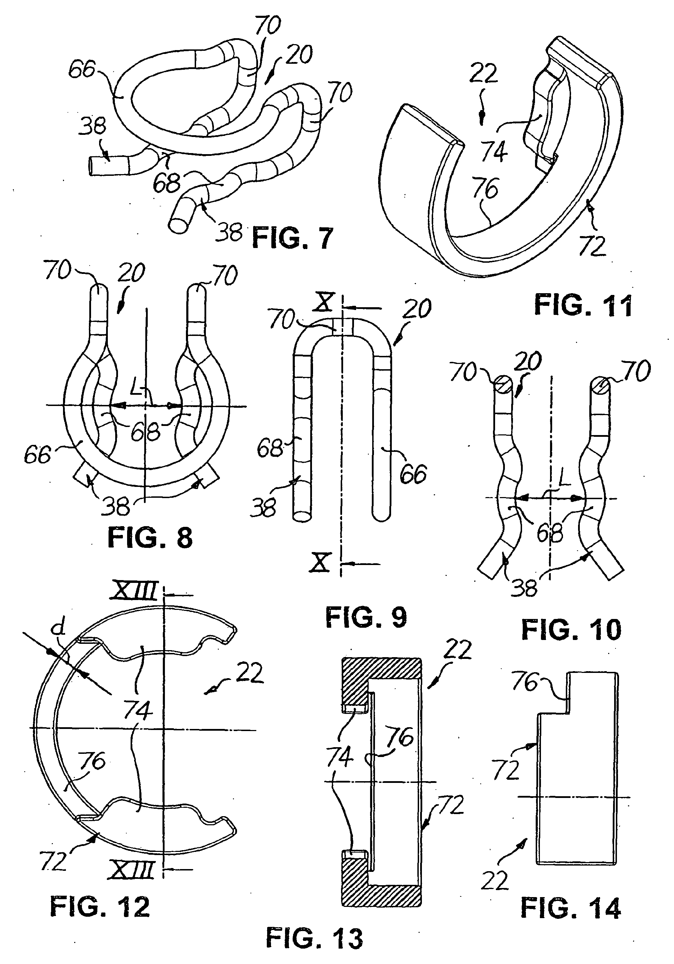

Wie die Fig. 1 bis 4 zeigen, hat die Steckverbindung 10 ein hülsenartiges Aufnahmeteil 14, in das ein in den Fig. 5 und 6 separat dargestelltes Einsteckteil 16 in einer Fügerichtung F einsteckbar ist, welches mit der Rohrleitung 12 verbunden ist. Hierbei kann das Einsteckteil 16 - wie im dargestellten Ausführungsbeispiel - einteilig mit der Rohrleitung 12 ausgebildet sein. Ferner weist die Steckverbindung 10 gemäß insbesondere Fig. 4 ein zwischen dem Aufnahmeteil 14 und dem Einsteckteil 16 abdichtendes Dichtelement 18 und ein am Aufnahmeteil 14 angebrachtes, federelastisches Sicherungselement 20 auf, welches in den Fig. 7 bis 10 einzeln dargestellt ist und dazu dient, das Einsteckteil 16 am Aufnahmeteil 14 lösbar zu sichern. Optional kann ein geschlitzter Indikatorring 22 vorgesehen sein, der in den Fig. 11 bis 14 separat gezeigt ist und auf noch zu beschreibende Weise für eine sicht- und/oder fühlbare Anzeige des Verbindungszustands der Steckverbindung 10 sorgt.

Wie deutlich der Fig. 5 zu entnehmen ist, weist das Einsteckteil 16 ein Widerlager 24 auf, mit einem sich entgegen der Fügerichtung F kontinuierlich im Außendurchmesser vergrößernden Aufweitungsabschnitt 26, über den das Sicherungselement 20 beim Einstecken des Einsteckteils 16 in das Aufnahmeteil 14 auffederbar ist, und einer Widerlagerfläche 28, hinter der das Sicherungselement 20 am Ende des Einsteckvorgangs verrastbar ist und die somit dazu dient, das Einsteckteil 16 gegen ein unbeabsichtigtes Lösen vom Aufnahmeteil 14 am Sicherungselement 20 abzustützen. Wesentlich ist, daß, wie nachfolgend noch näher beschrieben werden wird, der Aufweitungsabschnitt 26 entgegen der Fügerichtung F mit seinem größten Außendurchmesser etwa an der Widerlagerfläche 28 endet, so daß sich die Widerlagerfläche 28 im wesentlichen übergangslos an den Aufweitungsabschnitt 26 des Widerlagers 24 anschließt.

"Etwa" soll hier zum Ausdruck bringen, daß der Aufweitungsabschnitt 26 des Widerlagers 24 nicht unmittelbar an der Widerlagerfläche 28 des Widerlagers 24 angrenzen muß. Vielmehr kann zur Vermeidung eines spitzen Winkels zwischen Aufweitungsabschnitt 26 und Widerlagerfläche 28, an dem eventuell Materialausbrüche entstehen könnten, auch - wie im dargestellten Ausführungsbeispiel - ein axial sehr kurzer, abgerundeter Übergangsabschnitt zwischen Aufweitungsabschnitt 26 und Widerlagerfläche 28 vorgesehen sein. Die axiale Erstreckung eines solchen Übergangsabschnitts sollte im Falle z.B. eines Sicherungselements 20, das wie im gezeigten Ausführungsbeispiel aus einem runden Federstahldraht besteht, allerdings nicht größer sein als der halbe Durchmesser des Federstahldrahts, um jedenfalls sicherzustellen, daß entweder das Sicherungselement 20 am Ende des Einsteckvorgangs hinter der Widerlagerfläche 28 am Einsteckteil 16 verrastet oder aber, sollte das Einsteckteil 16 noch nicht weit genug in das Aufnahmeteil 14 eingesteckt worden sein, das Einsteckteil 16 infolge der radial wirkenden Federkraft des Sicherungselements 20 über den bezüglich der Mittelachse M des Einsteckteils 16 schrägen Aufweitungsabschnitt 26 entgegen der Fügerichtung F wieder aus dem Aufnahmeteil 14 hinausgeschoben wird, um eine noch nicht korrekt erfolgte Verbindung zwischen Einsteckteil 16 und Aufnahmeteil 14 anzuzeigen.

Wie insbesondere die Fig. 1, 2 und 4 zeigen, haben die Aufnahmeteile 14 des vorzugsweise aus einem metallischen Werkstoff, wie Stahl oder einer Aluminiumlegierung bestehenden Zwischenstücks jeweils eine zylindrische Außenumfangsfläche 30. Die zylindrischen Außenumfangsflächen 30 sind über einen Handhabungsabschnitt 32 in Form einer Schlüsselfläche od.dgl. miteinander verbunden. Nahe der Längsenden des Zwischenstücks ist jede zylindrische Außenumfangsfläche 30 mit einer Radialnut 34 von vorbestimmter Breite und Tiefe t versehen, die der Aufnahme des Indikatorrings 22 dient, wie die Fig. 1 bis 4 veranschaulichen.

Am äußeren, d.h. im Falle der in den Fig. 1, 2 und 4 linken Radialnut 34 linken Ende der Radialnut 34 sind in diese von diametral gegenüberliegenden Seiten des Aufnahmeteils 14 Schlitze 36 eingebracht, die senkrecht zur Mittelachse M verlaufen. Die jeweils zwei Schlitze 36 erstrecken sich ausgehend vom Nutgrund der Radialnut 34 in das Aufnahmeteil 14 hinein und dienen jeweils der Aufnahme eines von zwei Widerlagerarmen 38 des Sicherungselements 20.

Das Aufnahmeteil 14 hat des weiteren eine Anschlußbohrung 40 zur Aufnahme des Einsteckteils 16, die sich ausgehend von der Stirnseite in das Zwischenstück hinein erstreckt. Gemäß Fig. 4 sind die Anschlußbohrungen 40 der beiden Aufnahmeteile 14 des Zwischenstücks über eine in Längsrichtung des Zwischenstücks mittige Durchflußbohrung 42 hydraulisch miteinander verbunden. Die Anschlußbohrung 40 weist ausgehend von der Stirnseite des Zwischenstücks drei Bohrungsabschnitte 44, 46, 48 auf, mit einem ersten zylindrischen Bohrungsabschnitt 44, der sich in axialer Richtung etwa bis zum inneren Ende der Radialnut 34 erstreckt, einem sich daran stufenlos anschließenden, sich in Fügerichtung F konisch verjüngenden Bohrungsabschnitt 46 zum Zentrieren des Einsteckteils 16 beim Fügen der Steckverbindung 10 und einem der Aufnahme des Dichtelements 18 dienenden, zweiten zylindrischen Bohrungsabschnitt 48, der sich stufenlos an den konischen Bohrungsabschnitt 46 anschließt. Wie in Fig. 4 gut zu erkennen ist, ist der Durchmesser des zweiten zylindrischen Bohrungsabschnitts 48 kleiner als der Durchmesser des ersten zylindrischen Bohrungsabschnitts 44 aber größer als der Durchmesser der Durchflußbohrung 42, um einen im Verhältnis engen Ringraum zur Aufnahme des Dichtelements 18 zu begrenzen. Zu erwähnen ist an dieser Stelle noch, daß der Innendurchmesser des ersten zylindrischen Bohrungsabschnitts 44 nur geringfügig größer ist als der größte Außendurchmesser des konischen Aufweitungsabschnitts 26 des Widerlagers 24 am Einsteckteil 16, während der Innendurchmesser des zweiten zylindrischen Bohrungsabschnitts 48 nur geringfügig größer ist als der kleinste Außendurchmesser des Aufweitungsabschnitts 26, wobei der Aufweitungsabschnitt 26 den größten und kleinsten Außendurchmesser des Widerlagers 24 bestimmt. Im Ergebnis ist das Einsteckteil 16 im gefügten Zustand der Steckverbindung 10 mit nur sehr geringem Radialspiel in der Anschlußbohrung 40 des Aufnahmeteils 14 gehalten.

In den Fig. 5 und 6 sind weitere Einzelheiten des Einsteckteils 16 zu erkennen. Demgemäß weist das Einsteckteil 16 zunächst einen metallischen Rohrabschnitt 50 auf, der im dargestellten Ausführungsbeispiel einstückig und materialeinheitlich mit der Rohrleitung 12 ausgebildet ist. Bei letzterer handelt es sich bei Bremsenanwendungen in Kraftfahrzeugen in der Regel um ein doppelwandiges, innen und außen verkupfertes Stahlrohr, welches zudem aus Korrosionsschutzgründen am Außenumfang mit einer galvanisch aufgebrachten Zinkschicht versehen ist, auf der sich eine zusätzliche Kunststoffbeschichtung befindet. Am Rohrabschnitt 50 ist das aus einem Kunststoff mit einem im Verhältnis geringen Reibbeiwert, etwa Polyamid 6.6 - ggf. mit einem vorbestimmten Glasfaseranteil, z.B. 35% - bestehende Widerlager 24 befestigt. Genauer gesagt ist der Rohrabschnitt 50 vom freien Ende des Einsteckteils 16 beabstandet mit einem angestauchten Bördel 52 versehen, der über den Außendurchmesser des sonstigen Rohrabschnitts 50 nach radial außen vorsteht und um den herum das Widerlager 24 formschlüssig angespritzt ist, so daß der Bördel 52 von dem Aufweitungsabschnitt 26 des Widerlagers 24 umgeben ist.

Vor dem Anspritzen des Widerlagers 24 wird am freien Ende des Einsteckteils 16 an dem Rohrabschnitt 50 ein weiterer Bördel 54 angestaucht, der radial innen den freien Durchflußquerschnitt des Rohrabschnitts 50 gegenüber dem Rest des Rohrabschnitts 50 geringfügig beschränkt und radial außen etwas über den Rest des Rohrabschnitts 50 übersteht. Der weitere Bördel 54 bildet somit am Einsteckteil 16 eine stirnseitige Dichtfläche 56 aus, deren radiale Erstreckung größer ist als der Ringquerschnitt des Rohrabschnitts 50 ansonsten. An der Dichtfläche 56 des Bördels 54 liegt im montierten Zustand der Steckverbindung 10 gemäß Fig. 4 das in dem Aufnahmeteil 14, genauer dessen zweitem zylindrischen Bohrungsabschnitt 48 aufgenommene Dichtelement 18 dichtend an.

Wie insbesondere die Fig. 6 zeigt, kann die Dichtfläche 56 mit der Mittelachse M des Einsteckteils 16 einen Winkel b kleiner 90° und größer gleich 75° einschließen, so daß sich die Dichtfläche 56 in der Fügerichtung F im wesentlichen konisch verjüngt, wodurch das Dichtelement 18 im montierten Zustand der Steckverbindung 10 von der Dichtfläche 56 nach radial außen vorgespannt wird. Den jeweiligen funktionalen Erfordernissen entsprechend kann die Dichtfläche 56 sich aber auch senkrecht zur Mittelachse M des Einsteckteils 16 erstrecken, wie dies an dem in Fig. 4 rechten Einsteckteil 16 gezeigt ist.

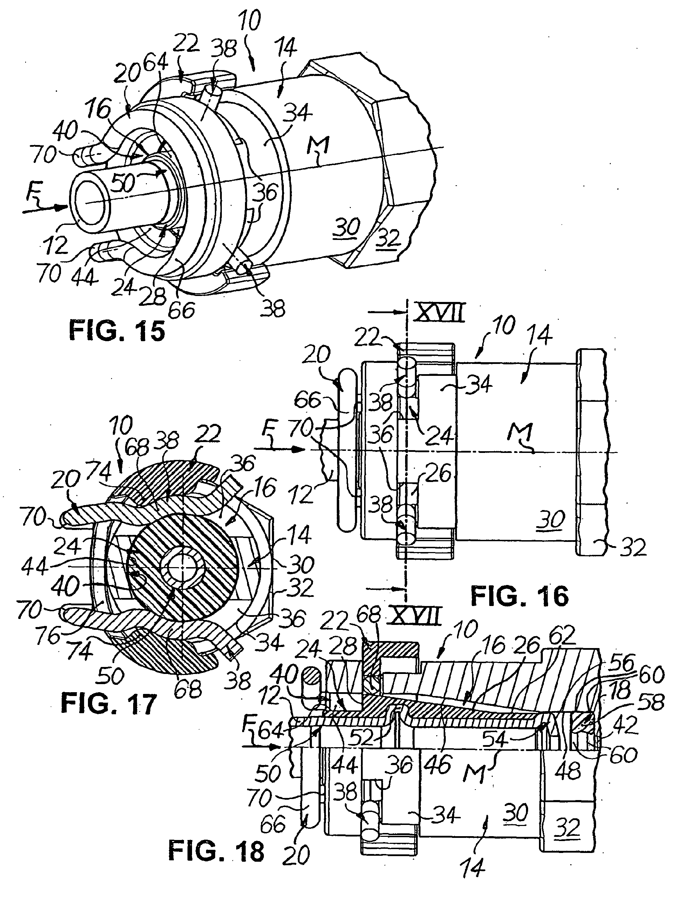

Bei den in den Fig. 4 und 18 zur Vereinfachung der Darstellung im unverformten Zustand gezeigten Dichtelementen 18 handelt es sich im dargestellten Ausführungsbeispiel um elastomere Quadringe, die, wie in Fig. 18 gekennzeichnet, jeweils einen Ringkörper 58 aufweisen, der hier einen im wesentlichen quadratischen Querschnitt hat, sowie vier ballige Dichtwulste 60, die im Querschnitt gesehen in symmetrischer Anordnung an den Ecken des Ringkörpers 58 ausgebildet sind. Man könnte auch sagen, daß der Quadring einen quadratischen Querschnitt mit abgerundeten Ecken und jeweils einer mittigen Vertiefung oder Auskehlung zwischen benachbarten abgerundeten Ecken aufweist. Den jeweiligen funktionalen Erfordernissen entsprechend könnte der Quadring aber auch eine andere Querschnittsform haben, beispielsweise einen trapezförmigen Querschnitt aufweisen.

Wie des weiteren insbesondere den Fig. 5 und 6 zu entnehmen ist, erstreckt sich das Widerlager 24 mit einem sich an den Aufweitungsabschnitt 26 stufenlos anschließenden Zylinderabschnitt 62 bis zu dem Bördel 54 des Rohrabschnitts 50 am freien Ende des Einsteckteils 16 hin, so daß der Rohrabschnitt 50 des Einsteckteils 16 vom Widerlager 24 bis zum endseitigen Bördel 54 hin schützend ummantelt ist.

In Fig. 5 ist ferner der Steigungswinkel a des Aufweitungsabschnitts 26 des Widerlagers 24 angetragen, d.h. der Winkel a, den der Aufweitungsabschnitt 26 mit der Mittelachse M des Einsteckteils 16 einschließt. Dieser kann im Bereich von 5° bis 20°, vorzugsweise im Bereich von 7° bis 10° liegen und ist mit der radial wirkenden Federkraft des Sicherungselements 20 abzustimmen. Einerseits darf hier der Winkel a nicht zu steil sein, damit sich die zum Fügen der Steckverbindung 10 benötigte Fügekraft in moderaten Grenzen hält. Andererseits darf der Winkel a auch nicht zu flach gewählt werden, damit sichergestellt ist, daß das aufgefederte, am Aufweitungsabschnitt 26 des Widerlagers 24 anliegende Sicherungselement 20 das Einsteckteil 16 entgegen der Fügerichtung F aus dem Aufnahmeteil 14 hinauszuschieben vermag, wenn die Steckverbindung 10 nicht korrekt gefügt wurde, um den nicht korrekt gefügten Zustand der Steckverbindung 10 anzuzeigen.

Schließlich ist insbesondere der Fig. 5 noch zu entnehmen, daß sich das Widerlager 24 mit einem im wesentlichen zylindrischen Anlageabschnitt 64 für das Sicherungselement 20 entgegen der Fügerichtung F über die senkrecht zur Mittelachse M des Einsteckteils 16 verlaufende, ringförmige Widerlagerfläche 28 hinaus erstreckt, worauf noch näher eingegangen werden wird.

In den Fig. 7 bis 10 ist das Sicherungselement 20 näher gezeigt, und zwar in seiner Ruhestellung, d.h. im unbelasteten Zustand. Gemäß insbesondere Fig. 8 ist das Sicherungselement 20 in einer Draufsicht gesehen im wesentlichen U-förmig, mit den zwei Widerlagerarmen 38, die über einen kreisförmigen Bogenabschnitt 66 federnd miteinander verbunden sind und sich im am Aufnahmeteil 14 montierten Zustand des Sicherungselements 20 durch die Schlitze 36 in die Anschlußbohrung 40 des Aufnahmeteils 14 hinein erstrecken (vergl. die Fig. 2 und 3). Dort haben die Widerlagerarme 38 jeweils einen Anlageabschnitt 68 für die Widerlagerfläche 28 des Widerlagers 24 am Einsteckteil 16. Während die Widerlagerarme 38 in der Seitensicht gemäß Fig. 9 gesehen in einer Ebene liegen, weisen sie in der Draufsicht nach Fig. 8 gesehen eine gebogene bzw. abgekröpfte Form auf, derart, daß sie im Bereich der Anlageabschnitte 68 der Kreiskrümmung des Widerlagers 24 folgen, so daß sie nicht punktsondern linienförmig am Widerlager 24 anliegen können.

Des weiteren ist insbesondere in den Fig. 7 bis 9 gut zu erkennen, daß die Widerlagerarme 38 des Sicherungselements 20 über Bügelabschnitte 70 mit dem Bogenabschnitt 66 verbunden sind, derart, daß sich der Bogenabschnitt 66 im wesentlichen parallel zu den Widerlagerarmen 38 erstreckt. Infolge dieser Ausgestaltung ist der Bogenabschnitt 66 gemäß den Fig. 1, 2, 4, 15, 16 und 18 vor der Öffnung der Anschlußbohrung 40 im Aufnahmeteil 14 angeordnet, wenn die Widerlagerarme 38 in den Schlitzen 36 im Aufnahmeteil 14 positioniert sind. Somit ist das Einsteckteil 16 durch den Bogenabschnitt 66 des Sicherungselements 20 hindurch in das Aufnahmeteil 14 einsteckbar, wodurch im montierten Zustand der Steckverbindung 10 das Sicherungselement 20 selbst am Einsteckteil 16 bzw. an der Rohrleitung 12 od.dgl. verliergesichert ist.

Wie insbesondere die Fig. 17 veranschaulicht, wirken die Bügelabschnitte 70 des Sicherungselements 20 als Torsionsfedern, deren Federkraft sich der Federkraft des als Biegefeder wirkenden Bogenabschnitts 66 sowie der Federkräfte der ebenfalls als Biegefedern wirkenden Widerlagerarme 38 des Sicherungselements 20 überlagert, um bei einem Auffedern oder -spreizen des Sicherungselements 20 an den Anlageabschnitten 68 der Widerlagerarme 38 radial nach innen gerichtete Reaktionskräfte zu erzeugen.

Zu dem Sicherungselement 20 ist schließlich noch anzumerken, daß der in den Fig. 8 und 10 eingezeichnete lichte Abstand L der Anlageabschnitte 68 der Widerlagerarme 38 im unbelasteten Zustand des Sicherungselements 20 kleiner ist als der in Fig. 5 eingezeichnete Außendurchmesser D des zylindrischen Anlageabschnitts 64 des Widerlagers 24. Infolge dieser Ausgestaltung schlagen die Widerlagerarme 38 des Sicherungselements 20 laut vernehmbar am Anlageabschnitt 64 des Widerlagers 24 an, wenn am Ende des Fügevorgangs das Sicherungselement 20 hinter der Widerlagerfläche 28 des Widerlagers 24 verrastet, um eine korrekte Verbindung von Einsteckteil 16 und Aufnahmeteil 14 auch akustisch anzuzeigen. Diese Abstimmung der Abmessungen L und D ist in Fig. 3 gut erkennbar, in der das Sicherungselement 20 im unbelasteten Zustand eingezeichnet ist, weshalb sich hier die Körperkanten von Sicherungselement 20 und Widerlager 24 überschneiden. Auch veranschaulicht die Fig. 3, daß der radiale Abstand der Schlitze 36 im Aufnahmeteil 14 mit dem lichten Abstand der Widerlagerarme 38 des Sicherungselements 20 abgestimmt ist, nämlich derart, daß das Sicherungselement 20 auch bei nicht gefügtem Einsteckteil 16 am Aufnahmeteil 14 gehalten ist, um die Handhabung der Steckverbindung 10 zu erleichtern.

Den Fig. 11 bis 14 sind weitere Details zu dem geschlitzten Indikatorring 22 zu entnehmen, der vorzugsweise aus einem Kunststoff spitzgegossen ist. Demgemäß hat der Indikatorring 22 in der Draufsicht entsprechend Fig. 12 gesehen einen im wesentlichen C-förmigen Grundkörper 72, dessen radiale Dicke d im wesentlichen der Tiefe t der Radialnut 34 im Aufnahmeteil 14 entspricht (siehe die Fig. 2 und 4). Am Innenumfang des Grundkörpers 72 weist der Indikatorring 22 auf im wesentlichen diametral gegenüberliegenden Seiten nach radial innen gerichtete Vorsprünge 74 auf, die derart ausgebildet sind, daß sie in die Schlitze 36 im Aufnahmeteil 14 passen. Genauer gesagt erstrecken sich gemäß insbesondere Fig. 3 die Vorsprünge 74 des Indikatorrings 22 in dessen am Aufnahmeteil 14 montierten Zustand in die Schlitze 36 im Aufnahmeteil 14 hinein, um an den Widerlagerarmen 38 des Sicherungselements 20, genauer an deren Anlageabschnitte 68 außen anzuliegen. Hierbei ist der Grundkörper 72 zwischen den Vorsprüngen 74 mit einer Aussparung 76 versehen, um nicht mit den Bügelabschnitten 70 des Sicherungselements 20 zu kollidieren.

Im Ergebnis ist der im montierten Zustand innenumfangsseitig an dem Sicherungselement 20 anliegende Indikatorring 22 beim Fügen der Steckverbindung 10 mit dem Sicherungselement 20 auffederbar, wobei der Indikatorring 22 gemäß der Momentaufnahme entsprechend den Fig. 15 bis 18 außenumfangsseitig über das Aufnahmeteil 14, genauer dessen Außenumfangsfläche 30 übersteht, wenn das Sicherungselement 20 mittels des Aufweitungsabschnitts 26 des Widerlagers 24 aufgefedert ist (noch nicht korrekt gefügt), oder gemäß den Fig. 1 bis 4 im wesentlichen bündig mit der Außenumfangsfläche 30 des Aufnahmeteils 14 abschließt, wenn das Sicherungselement 20 am Ende des Einsteckvorgangs hinter der Widerlagerfläche 28 des Widerlager 24 am Einsteckteil 16 verrastet ist (korrekt gefügt), um eine weitere sicht- und/oder fühlbare Anzeige für den Verbindungszustand der Steckverbindung 10 bereitzustellen.

Bliebe noch zu erwähnen, daß eine Demontage bzw. ein Lösen der Steckverbindung 10 nur mittels eines Spezialwerkzeugs (hier nicht dargestellt) möglich ist, wie es etwa in der US 5,909,901 offenbart wird. Ein solches Werkzeug kann im vorliegenden Fall zwei Vorsprünge aufweisen, die von der Stirnseite des Aufnahmeteils 14 aus in den ersten Bohrungsabschnitt 44 der Anschlußbohrung 40 einführbar sind, und zwar in radialer Richtung gesehen zwischen die Innenumfangsfläche des Aufnahmeteils 14 und die Außenumfangsfläche des Anlageabschnitts 64 des Widerlagers 24 am Einsteckteil 16, und in Umfangsrichtung betrachtet zwischen die Widerlagerarme 38 des Sicherungselements 20. Ein Drehen dieses Werkzeugs aus dieser Ausgangsposition um 90° um die Mittelachse M bewirkt nun ein radiales Aufspreizen des Sicherungselements 20 derart, daß das Einsteckteil 16 zusammen mit dem Werkzeug aus dem Aufnahmeteil 14 herausgezogen werden kann.

Aus der obigen Beschreibung ist ersichtlich, daß der korrekt bzw. nicht korrekt gefügte Zustand der Steckverbindung 10 optisch, haptisch bzw. fühlbar und akustisch angezeigt wird, wobei eine korrekt gefügte Steckverbindung vorliegt, (i) wenn das Einsteckteil 16 nicht durch das Sicherungselement 20 aus dem Aufnahmeteil 14 herausgedrückt wird (optische und haptische Anzeige), (ii) wenn der Indikatorring 22 nicht über die Außenumfangsfläche 30 des Aufnahmeteils 14 vorsteht (optische und haptische Anzeige), und (iii) wenn die Widerlagerarme 38 des Sicherungselements 20 beim Verrasten desselben hinter der Widerlagerfläche 28 am Aufnahmeteil 14 mit einem wahrnehmbaren Geräusch ("Klack") am Anlageabschnitt 64 des Widerlagers 24 anschlagen (akustische Anzeige). Für den Fachmann ist ersichtlich, daß die hierfür beschriebenen Maßnahmen den jeweiligen funktionalen Erfordernissen entsprechend auch unabhängig voneinander eingesetzt werden können. Im Ergebnis eignet sich die hier beschriebene Steckverbindung 10 sehr gut insbesondere für Einbauorte, die schwer zugänglich, für elektrische oder pneumatische Schrauber möglicherweise sogar unzugänglich, verdeckt, nicht einsehbar od.dgl. sind.

Es wird eine Steckverbindung für Rohrleitungen offenbart, mit einem Aufnahmeteil, einem darin prozeßsicher einsteckbaren Einsteckteil, einem zwischen Aufnahmeteil und Einsteckteil abdichtenden Dichtelement und einem federelastischen Sicherungselement zur Sicherung des Einsteckteils am Aufnahmeteil, wobei ersteres einen Rohrabschnitt aufweist, an dem ein Widerlager vorgesehen ist, mit einem sich entgegen der Fügerichtung im Außendurchmesser vergrößernden Aufweitungsabschnitt, über den das Sicherungselement auffederbar ist, und einer Widerlagerfläche, hinter der das Sicherungselement verrastbar ist und die das Einsteckteil gegen ein unbeabsichtigtes Lösen am Sicherungselement abstützt. Erfindungsgemäß endet der Aufweitungsabschnitt entgegen der Fügerichtung mit seinem größten Außendurchmesser etwa an der Widerlagerfläche, wobei an dem Rohrabschnitt ein Bördel ausgebildet ist, der eine stirnseitige Dichtfläche ausbildet, an der bei montierter Steckverbindung das Dichtelement dichtend anliegt. Im Ergebnis wird eine prozeßsichere Steckverbindung geschaffen, die im Vergleich zum Stand der Technik insbesondere im Hinblick auf die Stecksicherheit verbessert ist.

### BEZUGSZEICHENLISTE

- 10: Steckverbindung
- 12: Rohrleitung
- 14: Aufnahmeteil
- 16: Einsteckteil
- 18: Dichtelement
- 20: Sicherungselement
- 22: Indikatorring
- 24: Widerlager
- 26: Aufweitungsabschnitt
- 28: Widerlagerfläche
- 30: zylindrische Außenumfangsfläche
- 32: Handhabungsabschnitt
- 34: Radialnut
- 36: Schlitz
- 38: Widerlagerarm
- 40: Anschlußbohrung
- 42: Durchflußbohrung
- 44: erster zylindrischer Bohrungsabschnitt
- 46: konischer Bohrungsabschnitt
- 48: zweiter zylindrischer Bohrungsabschnitt
- 50: Rohrabschnitt
- 52: Bördel
- 54: Bördel
- 56: Dichtfläche
- 58: Ringkörper
- 60: Dichtwulst
- 62: Zylinderabschnitt
- 64: zylindrischer Anlageabschnitt
- 66: Bogenabschnitt
- 68: Anlageabschnitt
- 70: Bügelabschnitt
- 72: Grundkörper
- 74: Vorsprung

- 76: Aussparung

- F: Fügerichtung des Einsteckteils
- M: Mittelachse
- a: Steigungswinkel des Aufweitungsabschnitts
- b: Anstellwinkel der stirnseitigen Dichtfläche
- d: radiale Dicke des Indikatorring-Grundkörpers
- t: Tiefe der Radialnut

## Patentansprüche

1. Lösbare Steckverbindung (10) für Rohrleitungen (12) od.dgl., insbesondere in hydraulischen Kupplungsbetätigungs- und Bremsanlagen für Kraftfahrzeuge, mit einem Aufnahmeteil (14), einem in das Aufnahmeteil (14) in einer Fügerichtung (F) einsteckbaren, mit der Rohrleitung (12) od.dgl. verbundenen Einsteckteil (16), einem zwischen dem Aufnahmeteil (14) und dem Einsteckteil (16) abdichtenden Dichtelement (18) und einem am Aufnahmeteil (14) angebrachten, federelastischen Sicherungselement (20) zur Sicherung des Einsteckteils (16) am Aufnahmeteil (14), wobei das Einsteckteil (16) einen vorzugsweise metallischen Rohrabschnitt (50) aufweist, an dem ein vorzugsweise aus einem Kunststoff bestehendes Widerlager (24) vorgesehen ist, mit einem sich entgegen der Fügerichtung (F) kontinuierlich im Außendurchmesser vergrößernden Aufweitungsabschnitt (26), über den das Sicherungselement (20) beim Einstecken des Einsteckteils (16) in das Aufnahmeteil (14) auffederbar ist, und einer Widerlagerfläche (28), hinter der das Sicherungselement (20) am Ende des Einsteckvorgangs verrastbar ist und die dazu dient, das Einsteckteil (16) gegen ein unbeabsichtigtes Lösen vom Aufnahmeteil (14) am Sicherungselement (20) abzustützen, **dadurch gekennzeichnet, daß** der Aufweitungsabschnitt (26) entgegen der Fügerichtung (F) mit seinem größten Außendurchmesser etwa an der Widerlagerfläche (28) endet, wobei am freien Ende des Einsteckteils (16) an dem Rohrabschnitt (50) ein Bördel (54) ausgebildet ist, der am Einsteckteil (16) eine stirnseitige Dichtfläche (56) ausbildet, an der im montierten Zustand der Steckverbindung (10) das im Aufnahmeteil (14) aufgenommene Dichtelement (18) dichtend anliegt.

2. Steckverbindung (10) nach Anspruch 1, **dadurch gekennzeichnet, daß** der Rohrabschnitt (50) vom freien Ende des Einsteckteils (16) beabstandet mit einem angestauchten weiteren Bördel (52) versehen ist, um den herum das Widerlager (24) formschlüssig angespritzt ist.

3. Steckverbindung (10) nach Anspruch 1 oder 2, **dadurch gekennzeichnet, daß** der Kunststoff des Widerlagers (24) einen im Verhältnis geringen Reibbeiwert aufweist und der Aufweitungsabschnitt (26) des Widerlagers (24) mit der Mittelachse (M) des Einsteckteils (16) einen Winkel (a) im Bereich von 5° bis 20°, vorzugsweise im Bereich von 7° bis 10° einschließt.

4. Steckverbindung (10) nach einem der vorhergehenden Ansprüche, **dadurch gekennzeichnet, daß** die Dichtfläche (56) mit der Mittelachse (M) des Einsteckteils (16) einen Winkel (b) kleiner 90° und größer gleich 75° einschließt, so daß sich die Dichtfläche (56) in Fügerichtung (F) im wesentlichen konisch verjüngt.

5. Steckverbindung (10) nach einem der vorhergehenden Ansprüche, **dadurch gekennzeichnet, daß** sich das Widerlager (24) bis zu dem Bördel (54) des Rohrabschnitts (50) am freien Ende des Einsteckteils (16) hin erstreckt.

6. Steckverbindung (10) nach einem der vorhergehenden Ansprüche, **dadurch gekennzeichnet, daß** es sich bei dem Dichtelement (18) um einen elastomeren Quadring handelt, mit einem Ringkörper (58), der einen im wesentlichen quadratischen Querschnitt aufweist, und vier balligen Dichtwulsten (60), die im Querschnitt gesehen in symmetrischer Anordnung an den Ecken des Ringkörpers (58) ausgebildet sind.

7. Steckverbindung (10) nach einem der vorhergehenden Ansprüche, **dadurch gekennzeichnet, daß** das Sicherungselement (20) in einer Draufsicht gesehen im wesentlichen U-förmig ist, mit zwei Widerlagerarmen (38), die federnd miteinander verbunden sind und sich durch Schlitze (36) in das Aufnahmeteil (14) hinein erstrecken, wo sie jeweils einen Anlageabschnitt (68) für die Widerlagerfläche (28) am Widerlager (24) des Einsteckteils (16) aufweisen.

8. Steckverbindung (10) nach Anspruch 7, **dadurch gekennzeichnet, daß** die Widerlagerarme (38) des Sicherungselements (20) über Bügelabschnitte (70) mit einem Bogenabschnitt (66) verbunden sind, welcher sich im wesentlichen parallel zu den Widerlagerarmen (38) erstreckt und der federnden Verbindung der Widerlagerarme (38) dient, wobei das Einsteckteil (16) durch den Bogenabschnitt (66) hindurch in das Aufnahmeteil (14) einsteckbar ist, so daß im montierten Zustand der Steckverbindung (10) das Sicherungselement (20) selbst am Einsteckteil (16) oder an der Rohrleitung (12) od.dgl. verliergesichert ist.

9. Steckverbindung (10) nach Anspruch 7 oder 8, **dadurch gekennzeichnet, daß** sich das Widerlager (24) mit einem im wesentlichen zylindrischen Anlageabschnitt (64) für das Sicherungselement (20) entgegen der Fügerichtung (F) über die Widerlagerfläche (28) hinaus erstreckt, wobei der Außendurchmesser (D) des Anlageabschnitts (64) des Widerlagers (24) größer ist als der lichte Abstand (L) der Anlageabschnitte (68) der Widerlagerarme (38) im unbelasteten Zustand des Sicherungselements (20) .

10. Steckverbindung (10) nach einem der vorhergehenden Ansprüche, **gekennzeichnet durch** einen geschlitzten Indikatorring (22), der innenumfangsseitig an dem Sicherungselement (20) anliegt und mit diesem auffederbar ist, wobei der Indikatorring (22) außenumfangsseitig über das Aufnahmeteil (14) übersteht, wenn das Sicherungselement (20) mittels des Aufweitungsabschnitts (26) des Widerlagers (24) aufgefedert ist, und im wesentlichen bündig mit dem Aufnahmeteil (14) abschließt, wenn das Sicherungselement (20) am Ende des Einsteckvorgangs hinter der Widerlagerfläche (28) des Widerlagers (24) verrastet ist, um eine sicht- und/oder fühlbare Anzeige für den Verbindungszustand der Steckverbindung (10) bereitzustellen.

11. Steckverbindung (10) nach Anspruch 10, **dadurch gekennzeichnet, daß** das Aufnahmeteil (14) außenumfangsseitig mit einer Radialnut (34) zur Aufnahme des Indikatorrings (22) versehen ist, die eine vorbestimmte Tiefe (t) aufweist, daß sich ausgehend vom Nutgrund der Radialnut (34) die Schlitze (36) zur Aufnahme der Widerlagerarme (38) des Sicherungselements (20) in das Aufnahmeteil (14) hinein erstrecken, daß der Indikatorring (22) einen in einer Draufsicht gesehen im wesentlichen C-förmigen Grundkörper (72) aufweist, dessen radiale Dicke (d) im wesentlichen der Tiefe (t) der Radialnut (34) im Aufnahmeteil (14) entspricht, und daß am Innenumfang des Grundkörpers (72) des Indikatorrings (22) Vorsprünge (74) ausgebildet sind, die sich in die Schlitze (36) im Aufnahmeteil (14) hinein erstrecken, um an den Widerlagerarmen (38) des Sicherungselements (20) anzuliegen.

12. Steckverbindung (10) nach Anspruch 10 oder 11, **dadurch gekennzeichnet, daß** der Indikatorring (22) aus Kunststoff spritzgegossen ist.

## Claims

1. Releasable plug-in connection (10) for pipelines (12) or the like, in particular in hydraulic clutch actuation and brake systems for motor vehicles, comprising a receiving part (14), a plug-in part (16) which is connected to the pipeline (12) or the like and can be plugged into the receiving part (14) in a joining direction (F), a sealing element (18) for sealing between the receiving part (14) and the plug-in part (16), and an elastic securing element (20) which is fitted on the receiving part (14) for securing the plug-in part (16) to the receiving part (14), wherein the plug-in part (16) has a preferably metallic pipe section (50) on which there is provided an abutment (24) which preferably consists of plastic, said abutment comprising an expanding section (26) which expands continuously in terms of its external diameter counter to the joining direction (F), over which expanding section the securing element (20) can stretch when the plug-in part (16) is plugged into the receiving part (14), and an abutment face (28), behind which the securing element (20) can latch at the end of the plug-in operation and which serves to support the plug-in part (16) on the securing element (20) to prevent unintentional release from the receiving part (14), **characterized in that** the expanding section (26) ends, counter to the joining direction (F), with its largest external diameter more or less at the abutment face (28), wherein a flange (54) is formed on the pipe section (50) at the free end of the plug-in part (16), said flange forming a sealing face (56) at the end of the plug-in part (16), against which sealing face the sealing element (18) accommodated in the receiving part (14) bears in a sealing manner in the assembled state of the plug-in connection (10).

2. Plug-in connection (10) according to claim 1, **characterized in that** the pipe section (50) is provided with a further flange (52) at a distance from the free end of the plug-in part (16), around which further flange the abutment (24) is injection-molded in a form-fitting manner.

3. Plug-in connection (10) according to claim 1 or 2, **characterized in that** the plastic of the abutment (24) has a relatively low coefficient of friction and the expanding section (26) of the abutment (24) encloses an angle (a) in the range from 5° to 20°, preferably in the range from 7° to 10°, with the central axis (M) of the plug-in part (16).

4. Plug-in connection (10) according to one of the preceding claims, **characterized in that** the sealing face (56) encloses an angle (b) of less than 90° and of more than or equal to 75° with the central axis (M) of the plug-in part (16), so that the sealing face (56) tapers essentially conically in the joining direction (F).

5. Plug-in connection (10) according to one of the preceding claims, **characterized in that** the abutment (24) extends up to the flange (54) of the pipe section (50) at the free end of the plug-in part (16) .

6. Plug-in connection (10) according to one of the preceding claims, **characterized in that** the sealing element (18) is an elastomeric square ring, comprising an annular body (58), which has an essentially square cross section, and four spherical sealing beads (60) which, seen in cross section, are formed in a symmetrical arrangement at the corners of the annular body (58).

7. Plug-in connection (10) according to one of the preceding claims, **characterized in that** the securing element (20), seen in plan view, is essentially U-shaped, comprising two abutment arms (38) which are resiliently connected to one another and extend through slots (36) into the receiving part (14), where they respectively have a bearing section (68) for the abutment face (28) on the abutment (24) of the plug-in part (16) .

8. Plug-in connection (10) according to claim 7, **characterized in that** the abutment arms (38) of the securing element (20) are connected via clip sections (70) to a curved section (66) which extends essentially parallel to the abutment arms (38) and serves to resiliently connect the abutment arms (38), wherein the plug-in part (16) can be plugged through the curved section (66) into the receiving part (14) so that, in the assembled state of the plug-in connection (10), the securing element (20) itself is secured on the plug-in part (16) or on the pipeline (12) or the like so as to prevent it from being lost.

9. Plug-in connection (10) according to claim 7 or 8, **characterized in that** the abutment (24) extends beyond the abutment face (28), counter to the joining direction (F), with an essentially cylindrical bearing section (64) for the securing element (20), wherein the external diameter (D) of the bearing section (64) of the abutment (24) is larger than the clear spacing (L) of the bearing sections (68) of the abutment arms (38) in the unloaded state of the securing element (20).

10. Plug-in connection (10) according to one of the preceding claims, **characterized by** a slotted indicator ring (22) which on the inner circumference side bears against the securing element (20) and can be stretched by the latter, wherein the indicator ring (22) on the outer circumference side protrudes beyond the receiving part (14) when the securing element (20) is stretched by means of the expanding section (26) of the abutment (24), and is essentially flush with the receiving part (14) when the securing element (20) is latched behind the abutment face (28) of the abutment (24) at the end of the plug-in operation, in order to provide a visible and/or tangible indication of the connection status of the plug-in connection (10).

11. Plug-in connection (10) according to claim 10, **characterized in that** the receiving part (14) is provided on the outer circumference side with a radial groove (34) for receiving the indicator ring (22), said radial groove having a predefined depth (t), **in that**, starting from the groove bottom of the radial groove (34), the slots (36) for receiving the abutment arms (38) of the securing element (20) extend into the receiving part (14), **in that** the indicator ring (22) has a basic body (72) which is essentially C-shaped when seen in plan view, the radial thickness (d) of said basic body essentially corresponding to the depth (t) of the radial groove (34) in the receiving part (14), and **in that** protrusions (74) are formed on the inner circumference of the basic body (72) of the indicator ring (22), which protrusions extend into the slots (36) in the receiving part (14) in order to bear against the abutment arms (38) of the securing element (20).

12. Plug-in connection (10) according to claim 10 or 11, **characterized in that** the indicator ring (22) is injection-molded from plastic.

## Revendications

1. Jonction à enfichage détachable (10) pour des conduites tubulaires (12) ou similaires, en particulier dans des installations hydrauliques d'actionnement d'embrayage et de freinage pour des véhicules automobiles, comprenant une partie réceptrice (14), une partie enfichable (16) susceptible d'être enfichée dans la partie réceptrice (14) dans une direction d'assemblage (F) et reliée à la conduite tubulaire (12) ou similaire, un élément d'étanchement (18) qui assure un étanchement entre la partie réceptrice (18) et un élément de blocage (20) monté sur la partie réceptrice (14) et présentant l'élasticité d'un ressort, pour bloquer la partie enfichable (16) sur la partie réceptrice (14), la partie enfichable (16) comprenant un tronçon de tube de préférence métallique (50) sur lequel est prévu une contre-butée (24) réalisée de préférence en matière plastique, comprenant un tronçon évasé (26) dont le diamètre extérieur va continuellement en s'agrandissant à l'encontre de la direction d'assemblage (F), tronçon évasé sur lequel l'élément de blocage (20) est capable de se débattre élastiquement lors de l'enfichage de la partie enfichable (16) dans la partie réceptrice (14), et une surface de contre-butée (28), derrière laquelle l'élément de blocage (20) peut venir s'enclencher à la fin du processus d'enfichage et qui sert à soutenir la partie enfichable (16) contre l'élément de blocage (20) à l'encontre d'un détachement inopiné par rapport à la partie réceptrice (14), **caractérisée en ce que** le tronçon évasé (26) se termine, à l'encontre de la direction d'assemblage (F), avec son plus grand diamètre extérieur approximativement au niveau de la surface de contre-butée (28), un rabattement (54) étant réalisé à l'extrémité libre de la partie enfichable (16) sur le tronçon tubulaire (50), ledit rabattement formant sur la partie enfichable (16) une surface d'étanchement frontale (56) contre laquelle s'applique avec étanchéité, dans l'état monté de la jonction à enfichage (10), l'élément d'étanchement (18) reçu dans la partie réceptrice (14).

2. Jonction à enfichage (10) selon la revendication 1, **caractérisée en ce que** le tronçon tubulaire (50) est doté d'un autre rabattement refoulé (52), à distance de l'extrémité libre de la partie enfichable (16), autour duquel est réalisée la contre-butée (24) par enrobage à coopération de formes.

3. Jonction à enfichage (10) selon la revendication 1 ou 2, **caractérisée en ce que** la matière plastique de la contre-butée (24) présente un coefficient de friction comparativement plus faible, et le tronçon évasé (26) de la contre-butée (24) forme avec l'axe médian (M) de la partie enfichable (16) un angle (a) dans la plage de 5° à 20°, de préférence dans la plage de 7° à 10°.

4. Jonction à enfichage (10) selon l'une des revendications précédentes, **caractérisée en ce que** la surface d'étanchement (56) forme avec l'axe médian (M) de la partie enfichable (16) un angle (b) inférieur à 90° et supérieur ou égal à 75°, de sorte que la surface d'étanchement (56) se rétrécit essentiellement de manière conique dans la direction d'assemblage (F).

5. Jonction à enfichage (10) selon l'une des revendications précédentes, **caractérisée en ce que** la contre-butée (24) s'étend jusqu'au rabattement (54) du tronçon tubulaire (50) à l'extrémité libre de la partie enfichable (16).

6. Jonction à enfichage (10) selon l'une des revendications précédentes, **caractérisée en ce que** l'élément d'étanchéité (18) est une bague quadruple élastomère qui comprend un corps annulaire (58) présentant une section essentiellement carrée, et quatre bourrelets d'étanchement bombés (60) qui sont réalisés, vus en section transversale, suivant un agencement symétrique aux coins du corps annulaire (58).

7. Jonction à enfichage (10) selon l'une des revendications précédentes, **caractérisée en ce que** l'élément de blocage (20) est essentiellement en forme de U, vu en vue de dessus, avec deux bras de contre-butée (38), qui sont reliés avec effet élastique l'un à l'autre et qui s'étendent à travers des fentes (36) jusqu'en pénétration dans la partie réceptrice (14) où ils présentent chacun un tronçon d'appui (68) pour la surface de contre-butée (28) sur la contre-butée (24) de la partie enfichable (16).

8. Jonction à enfichage (10) selon la revendication 7, **caractérisée en ce que** les bras de contre-butée (38) de l'élément de blocage (20) sont reliés via des tronçons en étrier (70) à un tronçon en arc (66) qui s'étend essentiellement parallèlement aux bras de contre-butée (38) et qui sert à la liaison avec effet ressort des bras de contre-butée (38), ladite partie enfichable (16) étant enfichable à travers le tronçon en arc (66) jusque dans la partie réceptrice (14), de sorte que dans l'état monté de la liaison à enfichage (10), l'élément de blocage (20) est bloqué lui-même sur la partie enfichable (16) ou sur la conduite tubulaire (12) ou similaire, de manière protégée à l'encontre d'une perte.

9. Jonction à enfichage (10) selon la revendication 7 ou 8, **caractérisée en ce que** la contre-butée (24) s'étend au-delà de la surface de contre-butée (28) à l'encontre de la direction d'assemblage (F) par un tronçon d'appui (64) essentiellement cylindrique pour l'élément de blocage (20), le diamètre extérieur (D) du tronçon d'appui (64) de la contre-butée (24) étant supérieure à la distance libre (L) des tronçons d'appui (68) des bras de contre-butée (38) dans l'état non chargé de l'élément de blocage (20).

10. Jonction à enfichage (10) selon l'une des revendications précédentes, **caractérisée par** une bague indicatrice fendue (22) qui s'applique du côté de sa périphérie intérieure contre l'élément de blocage (20) et est capable de se débattre élastiquement avec celui-ci, ladite bague indicatrice (22) dépassant du côté de sa périphérie extérieure au-delà de la partie réceptrice (14) quand l'élément de blocage (20) a subi un débattement élastique au moyen du tronçon évasé (26) de la contre-butée (24) est se termine essentiellement en affleurement avec la partie réceptrice (14) lorsque, à la fin du processus d'enfichage, l'élément de blocage (20) s'est enclenché derrière la surface de contre-butée (28) de la contre-butée (24) afin de réaliser un indicateur visible et/ou tactile pour l'état de liaison de la jonction à enfichage (10).

11. Jonction à enfichage (10) selon la revendication 10, **caractérisée en ce que** la partie réceptrice (14) est dotée du côté de sa périphérie extérieure d'une gorge radiale (34) pour recevoir la bague indicatrice (22), qui présente une profondeur prédéterminée (t), **en ce que**, partant du fond de la gorge radiale (34), les fentes (36) pour recevoir les bras de contre-butée (38) de l'élément de blocage (20) s'étendent jusque dans la partie réceptrice (14), **en ce que** la bague indicatrice (22) comprend un corps de base (72) sensiblement en forme de C en vue de dessus, dont l'épaisseur radiale (d) correspond sensiblement à la profondeur (t) de la gorge radiale (34) dans la partie réceptrice (14), et **en ce que** des saillies (74) sont réalisées à la périphérie intérieure du corps de base (72) de la bague indicatrice (22), lesquelles s'étendent jusque dans les fentes (36) dans la partie réceptrice (14) pour venir s'appliquer contre les bras de contre-butée (38) de l'élément de blocage (20).

12. Jonction à enfichage (10) selon la revendication 10 ou 11, **caractérisée en ce que** la bague indicatrice (22) est moulée par injection en matière plastique.
